# EUROPÄISCHE PATENTANMELDUNG

(11) **EP 0 596 852 A1**
(43) Veröffentlichungstag der Anmeldung: **11.05.1994**
(21) Anmeldenummer: 93890175.8
(22) Anmeldetag: 06.09.1993
(51) Int. Cl.: C03B 33/07

(54) **Verfahren und Vorrichtung zum Schneiden von Verbundglas**

(30) Priorität: 02.11.1992 AT 2162/92
(71) Anmelder: Lisec, Peter, A-3363 Amstetten-Hausmening (AT)
(72) Erfinder: Lisec, Peter, A-3363 Amstetten-Hausmening (AT)
(74) Vertreter: Beer, Manfred, Dipl.-Ing.

(57) **Zusammenfassung**

Bei einem Verfahren zum Schneiden von Verbundglas wird das Verbundglas auf beiden Seiten geritzt, zunächst zur einen und dann zur anderen Seite geknickt, wobei man beim zweiten Knickvorgang die beiden Teile des Verbundglases auseinanderzieht. Die so gespannte Folie wird durch einen in den durch den Knickvorgang gebildeten Spalt gerichteten Plasmastrahl, der über die ganze Länge des Spaltes bewegt wrid, abgeschmolzen.

Die Vorrichtung zum Durchführen des Verfahrens besitzt zwei plattenartige Auflagen (1, 2) für das zu schneidende Verbundglas (10), von welchen mindestens eine um eine im Stoßbereich (3) zwischen den beiden Auflagen (1,) 2 verlaufende Achse (4) hin- und herverschwenkbar ist, und mit Klemmeinrichtungen zum Festlegen des Verbundglases an den Auflagen. Die Auflagen (1, 2) weisen an ihren unteren Rändern Förderorgane (5, 6) für das Verbundglas (10) und Klemmeinrichtungen (13, 14) zum Festlegen des Verbundglases (10) auf. Weiters ist ein Plasmabrenner (15) vorgesehen, der eine auf den Stoßbereich (3) zwischen den Auflagen (1, 2) hin gerichtete Austrittsöffnung (30) für den Plasmastrahl aufweist und der Plasmabrenner ist auf einer parallel zur Achse ausgerichteten Führungsschiene geführt.

## Beschreibung

Die Erfindung betrifft ein Verfahren zum Schneiden von Verbundglas, insbesondere Zweischeiben-Verbundglas, bei dem man das Verbundglas auf beiden Seiten ritzt, das Verbundglas zunächst zur einen und dann zur anderen Seite knickt, die zwischen den Scheiben des Verbundglases angeordnete Kunststofffolie spannt, indem man die beiden Teile des Verbundglases beim oder nach dem zweiten Knickvorgang auseinanderzieht und schließlich die Folie durch Wärmezufuhr abschmilzt.

Beim Schneiden von Zweischeiben-Verbundglas wurde oft so vorgegangen, daß die auf einem Schneidetisch horizontal liegende Scheibe auf einer Seite geritzt wurde, daß dann die Scheibe umgedreht und auf der zweiten Seite nochmals geritzt wurde. Hierauf wurde die Scheibe geknickt und die zwischen den Scheiben angeordnete Kunststofffolie (Polyvinylbutyralfolie) mit einer Klinge geschnitten. Bei dieser Arbeitsweise ist es problematisch, die auf einer Seite geritzte Scheibe umzudrehen. Darüber hinaus wird die Schneidklinge sehr rasch stumpf.

Um diese Probleme zu lösen, wurde in der DE-OS 26 57 757 vorgeschlagen, horizontal liegende Verbundglasscheiben auf beiden Seiten zu ritzen und die Folie nach dem Abknicken der Scheiben durch Erwärmen mit Infrarotstrahlung abzuschmelzen. Beim Abschmelzen der Folie durch Erwärmen mittels Infrarotstrahlen oder Gasbrennern, soweit dies über die gesamte Länge der Schnittlinie gleichzeitig vorgenommen wird, ergibt sich eine nur langsame Erwärmung, so daß die Folie unregelmäßig abschmilzt und darüber hinaus auch die Glastafeln in erheblichem Ausmaß erwärmt werden, was oft zu Spannungsbrüchen führt. Ein gemeinsamer Nachteil dieser bekannten Verfahren ist es, daß das Glas beim Knicken bzw. beim Wiederzurückbewegen im Bereich der Schnittlinie muschelartig ausbricht, so daß sich keine sauberen, sondern beschädigte Schnittkanten ergeben.

Ein Verfahren der eingangs genannten Gattung ist aus der DE-A-32 30 554 bekannt. Dadurch, daß bei diesem bekannten Verfahren im Gegensatz zur DE-A-26 57 757 der Verfahrensschritt des Auseinanderziehens der beiden Teile des Verbundglases vor dem Abschmelzen der Kunststoffolie, nämlich während des zweiten Knickvorganges, ausgeführt wird, wird das Ausmuscheln der Glaskanten verhindert. Zum anderen erlaubt es das Verfahren der DE-A-32 30 554, daß die Kunststoffolie mittels des Stoßes erhitzter Luft an sich einwandfrei und mit sauberer Schnittkante durchtrennt wird. Allerdings ergeben sich bei dem bekannten Verfahren insoferne Probleme als es nicht einfach ist, das vorrätig gehaltene Volumen an Luft rasch auf die erforderliche hohe Temperatur (in der DE-A-32 30 554 sind Temperaturen von 200 bis 300°C genannt) zu bringen und auf dieser hohen Temperatur zu halten.

Ein Nachteil bei dem aus der DE-OS 32 30 554 und der AT-PS 382 360 bekannten Verfahren ist es, daß sich der über die gesamte Länge des Spaltes gleichzeitig auszustoßende Luftstrahl nicht ausschließlich in den Bereich (Spalt) zwischen den Rändern der auseinandergezogenen Glasscheiben, zwischen welchen die Kunststoffolie gespannt ist, konzentrieren läßt. Es treten unweigerlich Verwirbelungen und eine Auffächerung des Stoßes erhitzter Luft auf, so daß auch die an den Spalt angrenzenden Glasränder erwärmt werden. Diese Erwärmung kann so weit gehen, daß sich die Kunststoffolie von den Glasscheiben löst und Feuchtigkeit in die Verbundglasscheibe eindringen kann, so daß diese milchig wird. Im übrigen besteht die Gefahr, daß sich die im Bereich der Ritzlinien in den Glasscheiben unvermeidlich entstehenden Mikrorisse unter der Wirkung der Erwärmung durch den Luftstoß vergrößern und Ausgangsstellen für Sprünge in den Glasscheiben bilden.

Aus der DD-PS 256 667 ist eine Anordnung zum Plasmaschneiden von Nichtleitern, wie Beton, Gestein, Glas u.ä. Werkstoffen bekannt, bei der die Stabilität des Plasmastrahls verbessert werden soll. Die DD-PS 200 075 betrifft ein Verfahren zum Schneiden von Polymethylacrylaten mit Hilfe von düsengepolten Plasmaschneidbrennern. Weder die DD-PS 256 667 noch die DD-PS 200 075 beschäftigen sich aber mit dem Schneiden von Verbundglas und den damit verbundenen, oben geschilderten Problemen.

Der Erfindung liegt die Aufgabe zugrunde, das Verfahren der gattungsgemäßen Art in der Weise weiterzubilden, daß die Folie über ihre gesamte Länge gleichmäßig und rasch abgeschmolzen wird, ohne daß sich die dem Spalt benachbarten Bereiche der Glasscheiben merklich erwärmen.

In Lösung dieser Aufgabe besteht die Erfindung darin, daß man zum Abschmelzen der Folie in den durch das Auseinanderziehen der beiden Teile des Verbundglases gebildeten Spalt einen Strahl von Gas im Plasmazustand richtet, daß man den Strahl von Gas im Plasmazustand von einem Ende des Spaltes in dessen Längsrichtung bis zum anderen Ende desselben bewegt und daß man den Strahl aus Gas im Plasmazustand so konzentriert und bündelt, daß sein Außenumfang mit Abstand von den Rändern der beiden Teile des Verbundglases, die den Spalt begrenzen, angeordnet ist.

Durch das Verwenden eines Plasmastrahles ist es nicht mehr nötig, erhitzte Luft vorrätig zu halten, so daß auch die beim bekannten Verfahren gemäß der DE-OS 32 30 554 auftretenden Probleme vermieden sind. Insbesondere wird verhindert, daß sich Teile der Vorrichtung in unerwünschter Weise erwärmen und dann auch das Verbundglas thermisch belastet wird. So wird die Gefahr von Spannungsbrüchen verringert.

Ein Plasmastrahl hat weiters den Vorteil, daß die zum Abschmelzen der Folie erforderliche Wärmemenge in ganz kurzer Zeit aufgebracht werden kann, so daß der Plasmabrenner nur ganz kurzer Zeit in Betrieb genommen werden muß und rasch entlang dem Spalt quer über die Verbundglasscheibe geführt werden kann.

Durch die erfindungsgemäße Bündelung des Strahls aus Gas im Plasmazustand berührt dieser die Ränder der den Spalt begrenzenden Glasscheiben nicht mehr, so daß sich diese nicht erwärmen (in der Praxis hat sich gezeigt, daß diese höchstens handwarm werden - bei früheren Vorrichtungen wurden die Glasscheiben in ihren Rändern so heiß, daß man sie mit der bloßen Hand nicht mehr berühren konnte), so daß die Gefahr von Sprüngen einerseits und von Ablösungen der Glasscheiben von der Kunststoffolie anderseits und dem Einkriechen von Feuchtigkeit zwischen die Glasscheiben, gefolgt von einem Milchigwerden der Verbundglasscheibe, nicht mehr zu befürchten sind. Da der Strahl aus Gas im Plasmazustand, dessen Temperatur im Kern 10000°C bis 15000°C betragen kann, so stark gebündelt werden kann, daß er die Ränder der Glasscheiben, welche den Spalt begrenzen, nicht berührt, und durch die Möglichkeit, den Strahl aus Gas im Plasmazustand so schnell zu bewegen, daß sich nur die Folie erwärmt, nicht aber die Glasränder, ergibt sich eine weitere Vereinfachung und vorteilhafte Wirkung des erfindungsgemäßen Verfahrens.

Vorteilhafte Varianten des erfindungsgemäßen Verfahrens sind Gegenstand der Unteransprüche 2 bis 4.

Die Erfindung betrifft weiters eine Vorrichtung zum Durchführen des Verfahrens mit zwei plattenartigen Auflagen für das zu schneidende Verbundglas, von welchen mindestens eine um eine im Stoßbereich zwischen den beiden Auflagen verlaufende Achse hin- und herverschwenkbar ist, und mit Klemmeinrichtungen zum Festlegen des Verbundglases an den Auflagen. Wenn die Auflagen im wesentlichen vertikal ausgerichtet sind, weisen sie an ihren unteren Rändern, Förderorgane für das Verbundglas auf.

Erfindungsgemäß ist diese Vorrichtung dadurch gekennzeichnet, daß ein Plasmabrenner vorgesehen ist, der eine auf den Stoßbereich zwischen den Auflagen hin gerichtete Austrittsöffnung für den Plasmastrahl aufweist, und daß der Plasmabrenner auf einer parallel zur Achse ausgerichteten Führungsschiene geführt ist.

Vorteilhafte Ausführungsformen der erfindungsgemäßen Vorrichtung sind Gegenstand der Unteransprüche 6 bis 12.

In einer alternativen Ausführungsform ist die Vorrichtung zum Durchführen des Verfahrens nach einem der Ansprüche 1 bis 4 mit zwei plattenartigen Auflagen für das zu schneidende Verbundglas, von welchem eine um eine im Stoßbereich zwischen den beiden Auflagen verlaufende Achse hin- und herverschwenkbar ist und mit Einrichtungen zum Festlegen des Verbundglases an den Auflagen, die beiderseits des Stoßbereiches zwischen den beiden Auflagen angeordnet sind, dadurch gekennzeichnet, daß eine der beiden im wesentlichen horizontal ausgerichteten Platten im Maschinengestell starr befestigt ist, wogegen die zweite Platte um eine im Stoßbereich angeordnete, unterhalb der Platten liegende Achse auf- und abverschwenkbar gelagert und zusätzlich in Richtung der Ebene der ortssfesten Platte quer zu dieser beweglich ist, daß der Plasmabrenner auf einer parallel zur Achse ausgerichteten Führungsschiene geführt ist.

Vorteilhafte und bevorzugte Ausführungsformen dieser Vorrichtung und jener der Vorrichtung nach Anspruch 5 bis 12 sind Gegenstand der Unteransprüche 14 bis 21.

Weitere Einzelheiten und Merkmale der Erfindung ergeben sich aus der nachfolgenden Beschreibung bevorzugter Ausführungsbeispiele des Verfahrens derErfindung und von Ausführungsformen von Vorrichtungen gemäß der Erfindung, in der auf die Zeichnungen Bezug genommen wird. Es zeigt:
Fig. 1 eine Vorrichtung in Ansicht,
Fig. 2 einen Schnitt längs der Linie III-III während der Ausführung der Ritzarbeit,
Fig. 3 einen Schnitt längs der Linie III-III in Fig. 1 mit eingeschwenktem Plasmabrenner,
Fig. 4 in vergrößertem Maßstab die Trennfuge nach dem zweiten Knickvorgang und
Fig. 5 eine andere Ausführungsform der Vorrichtung.

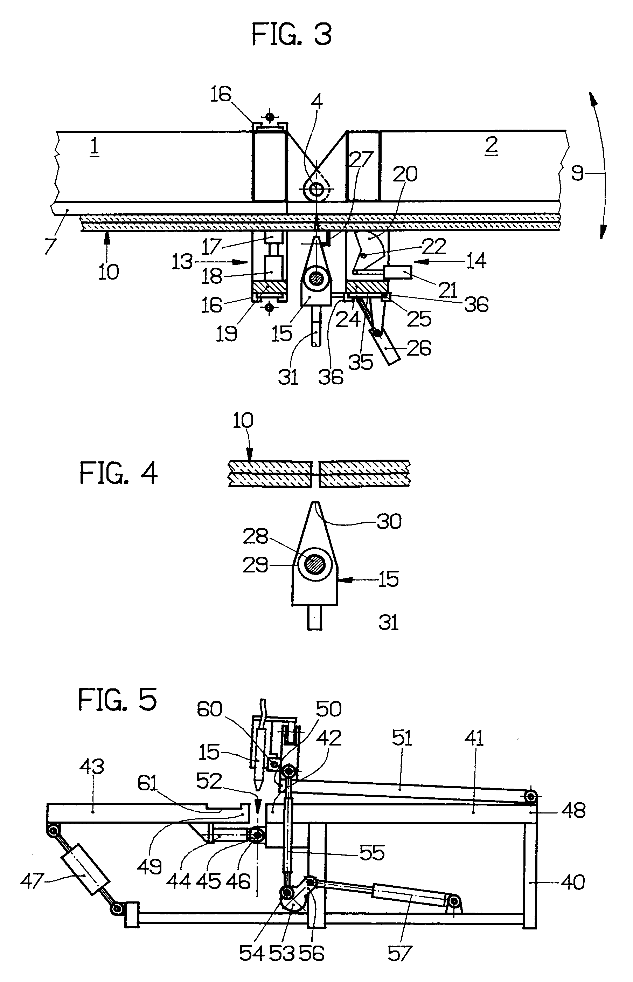

Die Vorrichtung zum Schneiden von Verbundglasscheiben 10, insbesondere Zweischeiben-Verbundglasscheiben, besitzt zwei plattenartige Auflagen 1 und 2, die um eine im Stoßbereich 3 zwischen den Auflagen 1 und 2 verlaufende, im wesentlichen vertikale Achse 4 relativ zueinander verschwenkbar sind. Im gezeigten Ausführungsbeispiel ist die in Förderrichtung (Pfeil 8) erste, plattenartige Auflage 1 gestellfest angeordnet, wogegen die zweite, plattenartige Auflage 2 um die Achse 4 in Richtung des Doppelpfeiles 9 in Fig. 3 verschwenkbar ist. Die beiden Auflagen 1 und 2 können im wesentlichen lotrecht stehend, um wenige Grad nach hinten geneigt angeordnet sein und besitzen in diesem Fall an ihren unteren Rändern Fördereinrichtungen in Form von Förderrollen 5 bzw. 6, Förderbändern od. dgl.

Eine zu schneidende Verbundglasscheibe 10 wird auf den Förderrollen 5 stehend und von der plattenartigen Auflage 1 seitlich gestützt in Richtung des Pfeiles 8 in die Vorrichtung gefördert.

Das richtige Ausrichten der Verbundglasscheibe 10 gegenüber den noch zu erläuternden Schneideinrichtungen wird mit Hilfe von verstellbaren Anschlägen oder Meßleisten oder aber durch den Förderrollen 5 und/oder 6 zugeordnete Wegmeßeinrichtungen ermittelt. Insbesondere den Förderrollen 5 und/oder 6 zugeordnete Wegmeßeinrichtungen (Inkrementalgeber) erlauben ein weitgehendes Automatisieren der Schnittlagenbestimmung.

Die vorderen, der Verbundglasscheibe 10 zugewandten Flächen der Auflagen 1 und 2 sind als gelochte Platten 7 ausgebildet, wobei zwischen der Platte 7 und der Verbundglasscheibe 10 ein Luftkissen erzeugt werden kann. Hiezu kann den nicht gezeigten Öffnungen in den Platten 7 Druckluft zugeführt werden. Durch das Luftkissen ist ein praktisch reibungsfreier Transport in der erfindungsgemäßen Vorrichtung möglich. Es können aber auch Auflagen in Form von Rollenfeldern verwendet werden.

Im Stoßbereich 3 zwischen den beiden Auflagen 1 und 2 sind Schneidwerkzeuge 11 und 12, Klemmeinrichtungen 13 und 14 sowie ein Plasmabrenner 15 vorgesehen.

Die Schneidwerkzeuge 11 und 12 sind auf Schienen 16 geführt und im Stoßbereich 3 zum Ritzen der Verbundglasscheiben 10 auf- und abverschiebbar. Die Schneidwerkzeuge 11 und 12 werden, wie im Ausführungsbeispiel gezeigt, von Spindelantrieben bewegt, können aber auch durch Kettenzüge od. dgl. bewegbar sein.

Die der Auflage 1 zugeordnete Klemmeinrichtung 13 umfaßt einen Klemmbalken 17, der mit Hilfe von Druckmittelzylindern 18, die an einem mit der Auflage 1 starr verbundenen Hilfsrahmen 19 befestigt bzw. abgestützt sind, betätigt, d.h. gegen die Auflage 1 bzw. eine auf dieser aufliegende Verbundglasscheibe 10 gedrückt werden kann.

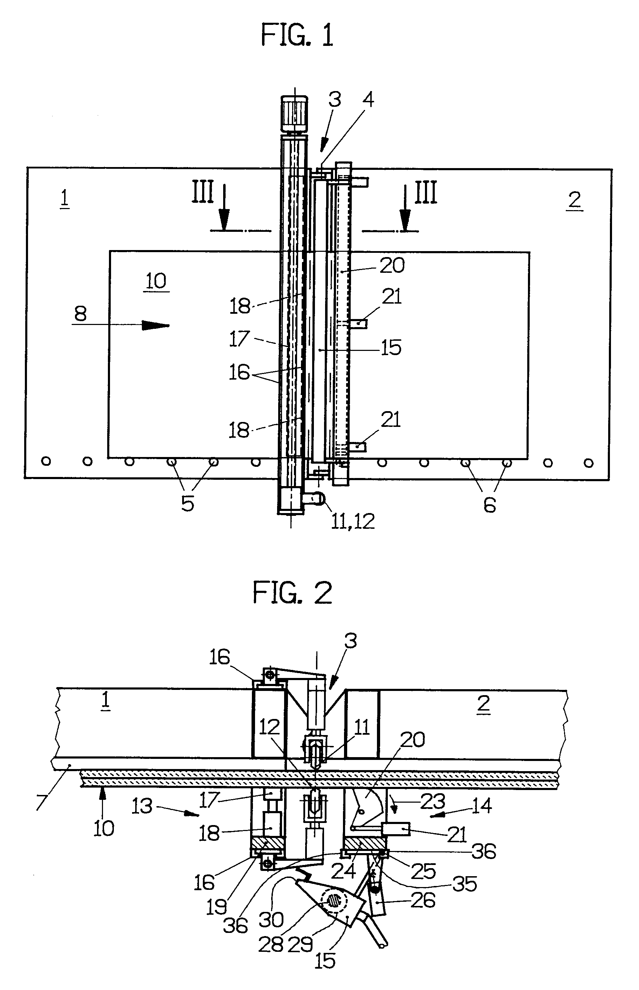

Die der Auflage 2 zugeordnete Klemmeinrichtung 14 ist als Exzenterbalken 20 ausgebildet, der von Druckmittelzylindern 21 um eine gegenüber der Auflage 2 nicht bewegliche Achse 22 in seine Wirkstellung verschwenkbar (Pfeil 23 in Fig. 2) ist. Durch die spezielle Ausbildung des Exzenterbalkens 20 wird der auf der Auflage 2 anliegende Teil des Verbundglases 10 nicht nur an der Auflage 2 gehalten, sondern zusätzlich in Richtung vom Stoßbereich 3 zwischen den Auflagen 1 und 2 weg belastet.

Der Plasmabrenner 15 ist im gezeigten Ausführungsbeispiel über einen Schlitten 35 am Hilfsrahmen 24 in den Führungsschienen 16 ähnlichen Führungsschienen 36 parallel zum Stoßbereich 3 zwischen den Auflagen 1 und 2 verschiebbar. Hiezu ist dem Plasmabrenner 15 ein, nicht gezeigter Antrieb (Spindelantrieb, Kettenzug, Zahnriemen od. dgl.) zugeordnet. Weiters kann der Plasmabrenner 15 um eine Achse 25, die an dem mit der Auflage 2 starr verbundenen Hilfsrahmen 24 geführten Schlitten 35 vorgesehen ist, mit Hilfe von Druckmittelzylindern 26 zwischen den in den Fig. 2 und 3 gezeigten Endlagen (Bereitschaftsstellung in Fig. 2, Wirkstellung in Fig. 3) verschwenkbar sein. Der Plasmabrenner 15 besitzt einen an ihm vorgesehenen Anschlag 27, der, wie Fig. 3 zeigt, die genaue Ausrichtung des Plasmabrenners 15 gegenüber der Verbundglasscheibe 10 gewährleistet. Im Plasmabrenner 15 sind an sich bekannte, in den Fig. 1 bis 4 nur schematisch angedeutete Einrichtungen 28 und 29 vorgesehen, mit denen über eine Leitung 31 zugeführtes Gas in den Plasmazustand gebracht werden kann. Solche Einrichtungen sind z.B. solche, die an das Gas ein hochfrequentes, elektrisches Feld anlegen, oder solche, die den Plasmazustand durch elektrische Entladungen oder durch Photonenstrahlen z.B. aus Lasern erzeugen. Weiters kann der Plasmazustand des zugeführten Gases mit Hilfe von Lichtbogen herbeigeführt werden.

An seinem vorderen Ende besitzt der Plasmabrenner 15 eine Austrittsöffnung 30, aus der Gas im Plasmazustand vorzugsweise stoßartig austritt und in den Trennbereich zum Abschmelzen der die Einzelscheiben der Verbundglasscheibe 10 verbindenden Kunststoffolie gelangt. Dabei wird der Plasmasstrahl so geregelt, daß er die im Bereich des Spaltes gespannte Kunststoffolie mit seiner Spitze gerade berührt. Überdies wird der Plasmastrahl so gebündelt, daß er die dem Spalt zwischen den beiden Teilen der Verbundglasscheibe benachbarten Ränder dieser Teile nicht berührt.

Um die vom Exzenterbalken 20 bewirkte Vorspannung zu vergrößern, kann vorgesehen sein, daß die Förderrollen 6 der Auflage 2 unabhängig von den Förderrollen 5 der Auflage 1 betätigbar sind, so daß die vom Exzenterbalken 20 ausgeübte Vorspannung verstärkt wird.

Das Festhalten einer Verbundglasscheibe 10 an den Auflagen 1 und 2 durch die Klemmeinrichtungen 13 und 14 kann dadurch unterstützt werden, daß an die nicht gezeigten Öffnungen in der luftdurchlässigen Platte 7 ein Vakuum angelegt wird, so daß die Verbundglasscheibe 10 gegen die Auflagen 1 und 2 gesaugt wird. Auf diese Weise ist sichergestellt, daß die Verbundglasscheibe 10 unverrückbar an den Auflagen 1 und 2 anliegt.

Die Vorrichtung kann auch im wesentlichen horizontale Auflagen 1 und 2 aufweisen. Der Plasmabrenner 15 kann bei wie in den Fig. 1 bis 3 gezeigt, im wesentlichen lotrechten Auflagen 1 und 2 wie gezeigt "vor" oder (nicht gezeigt) "hinter" den Auflagen 1 und 2 angeordnet sein. Bei horizontalen Auflagen 1 und 2 kann der Plasmabrenner 15 "oberhalb" oder "unterhalb" der Auflagen 1 und 2 angeordnet sein.

Die soeben beschriebene Vorrichtung arbeitet wie folgt:

Eine Verbundglasscheibe 10 wird in Richtung des Pfeiles 8 auf den Förderrollen 5 stehend und über das Luftkissen an der Auflage 1 anliegend herangefördert, bis die gewünschte Relativlage zu den Schneidwerkzeugen 11 und 12 erreicht ist. In dieser Phase befindet sich die Auflage 2 in derselben Ebene wie die Auflage 1. Sobald die gewünschte Endlage erreicht ist, wird die Verbundglasscheibe 10 durch Betätigen der Klemmeinrichtungen 13 und 14 und durch Anlegen von Unterdruck an die Öffnungen in der Platte 7 fixiert, worauf die Schneidwerkzeuge 11 und 12 zum beidseitigen Ritzen der Verbundglasscheibe 10 betätigt werden.

Nach dem Ritzen wird die Verbundglasscheibe 10 zunächst nach vorne geknickt, wozu die Auflage 2 um die Achse 4 um wenige Grad nach vorne verschwenkt wird. Nach diesem ersten Knickvorgang wird die Auflage 2 um die Achse 4 zum Ausführen des zweiten Knickvorganges nach hinten bewegt. Dadurch, daß der auf der Auflage 2 aufliegende Teil der Verbundglasscheibe 10 zum Exzenterbalken 20 und gegebenenfalls von den Förderrollen 6 im Sinne einer Bewegung vom Knickbereich (Stoßbereich 3) weg belastet ist, wird beim zweiten Knickvorgang die in Fig. 4 schematisch gezeigte Stellung mit gespannter Folie im Spalt zwischen den Teilen der Verbundglasscheibe 10 erreicht.

Noch vor dem Beginn des zweiten Knickvorganges wurde der Plasmabrenner 15 in die in Fig. 3 gezeigte Stellung geschwenkt und gegebenenfalls schon nach dem Schwenken der Auflage 2 um 1° nach hinten in Betrieb genommen, so daß Gas im Plasmazustand aus der Austrittsöffnung 30 austritt. Nun wird der Plasmabrenner 15 entlang des Spaltes bewegt, so daß durch den aus der Austrittsöffnung 30 austretenden Plasmastrahl die Folie über die ganze Länge des Spaltes abgeschmolzen wird. Dabei ist es möglich, den Plasmabrenner 15 so rasch zu bewegen, daß die Folie bereits über ihre ganze Länge durchgetrennt ist, wenn der zweite Knickvorgang (Gesamtverschwenkung 4 - 5°) beendet ist.

Hierauf wird die Auflage 2 wieder in ihre mit der Auflage 1 fluchtende Stellung nach vorne geschwenkt, wobei auf Grund der weiter oben beschriebenen Vorspannung die Glaskanten einander im Bereich der soeben erzeugten Trennfuge (Schnittstelle) nicht mehr berühren, so daß eine Beschädigung der Glaskanten (Ausmuscheln) vermieden ist. Durch Betätigen der Förderrollen 6 nach dem Lösen des Exzenterbalkens 20 und dem Umschalten der den Öffnungen in der Platte 7 zugeführten Saugluft auf Druckluft wird das abgeschnittene Stück des Verbundglases 10 aus der Vorrichtung weg befördert.

Auf Grund des genauen Festlegens der Verbundglasscheibe in der erfindungsgemäßen Vorrichtung gestattet es diese auch, von Verbundglasscheiben sehr schmale Streifen abzutrennen.

Bei der in Fig. 5 gezeigten Ausführungsform der erfindungsgemäßen Vorrichtung ist eine im Maschinengestell 40 ortsfest montierte Auflageplatte 41 vorgesehen. Mit Abstand vom Längsrand 42 der Auflageplatte 41 ist im Maschinengestell 40 beweglich eine weitere Auflageplatte 43 vorgesehen. Die weitere Auflageplatte 43 ist im Maschinengestell 40 verschwenkbar gelagert. Die verschwenkbare Lagerung umfaßt zwei am Rahmen der weiteren Auflageplatte 40 montierte Druckmittelmotore 44, an deren Kolbenstangen 45 je ein Lagerauge 46 befestigt ist, die um im Maschinengestell 40 ortsfest montierte Lagerzapfen verschwenkbar ist. In einer nicht gezeigten, bevorzugten Ausführungsform sind die beiden Druckmittelzylinder 44 und die Lagerzapfen in der Auflageebene der Auflageplatten 41 und 43 angeordnet, wobei die Lagerzapfen auch im Bereich des der Stoßstelle 52 benachbarten Randes 49 der beweglichen Auflageplatte 43 angeordnet sein können.

Am Rahmen der weiteren Auflageplatte 43 greift ein am Maschinengestell 40 abgestützter, schräg zur Auflageplatte 43 ausgerichteter Druckmittelmotor 47 an, der als nach zwei Richtungen wirksamer Druckmittelzylinder ausgebildet ist, wobei beide Teile des Druckmittelzylinders 47 voneinander unabhängig betätigt werden können. Durch Betätigen des Druckmittelzylinders 47 kann die zweite Auflageplatte 43 gegenüber der ersten Auflageplatte 41 um die von den Zapfen 5 gebildete Achse nach oben und nach unten verschwenkt werden.

Durch Betätigen der beiden Druckmittelmotore 44, die am Rahmen der beweglichen Auflageplatte 43 an ihrem der starren Auflageplatte 41 benachbarten Rand 42 montiert sind, und deren Kolbenstangen 45 die Lageraugen 46 für die Lagerung der beweglichen Auflageplatte 43 tragen, kann die bewegliche Auflageplatte 43 von der starren Auflageplatte 41 entfernt werden.

An der starren Auflageplatte 41 ist ein Klemmbalken 50 zum klemmenden Festlegen der zu zerteilenden Verbundglasscheibe vorgesehen. Dieser Klemmbalken 50 ist an zwei Hebeln 51 montiert, die im Maschinengestell 40 an der an der Stoßstelle 52 zwischen den beiden Platten 41, 43 entfernten Rand 48 der ortsfesten Auflageplatte 41 verschwenkbar gelagert sind. Unterhalb der ortsfesten Auflageplatte 41 im Stoßbereich 52 der beiden Auflageplatten 41, 43 ist im Maschinengestell 40 eine um eine horizontale Achse verdrehbare Welle 53 vorgesehen. Die Welle 53 trägt an ihren Enden zwei Kurbelzapfen 54, die über Schubstangen 55 mit den Enden des Klemmbalkens 50 verbunden sind. Zum Verdrehen der Welle 53 und damit zum Anheben und Absenken des Klemmbalkens 50 sind zwei an Hebelarmen 56, die an der Welle 53 befestigt sind, angreifende und mit ihren anderen Enden im Maschinengestell 40 abgestützte Druckmittelzylinder 57 vorgesehen.

An der der Stoßstelle 52 zwischen den beiden Platten 41, 43 zugewendeten Seite des Klemmbalkens 50 ist eine Führungsschiene 60 montiert, an der sowohl ein an der Oberseite der Verbundglasscheibe angreifendes, nicht gezeigtes Schneidwerkzeug 11 als auch der Plasmabrenner 15 verschiebbar geführt sind. Ein weiteres, ebenfalls in Fig. 5 nicht gezeigtes Schneidwerkzeug 12 zum Ritzen der unteren Scheibe der Verbundglasscheibe ist an einer am Rand der starr montierten Auflageplatte 41 vorgesehenen Führungsschiene verschiebbar geführt. Vorzugsweise werden beide Ritz- bzw. Schneidwerkzeuge 11, 12 synchron bewegt.

Um den auf der beweglichen Auflageplatte 43 aufliegenden Teil der Verbundglasscheibe an dieser festhalten zu können, kann an ihrem der Stoßstelle 52 benachbarten Rand eine Reihe von Saugern 61 vorgesehen sein, oder aber es ist ein Klemmbalken 50 vorgesehen, wie er auch der ortsfesten Auflageplatte 41 zugeordnet ist. Ein Klemmbalken 50 hat den Vorteil, daß von einer Verbundglasscheibe auch schmälere Streifen abgetrennt werden können als wenn diese mit Saugern festgehalten wird.

Durch die bei der in Fig. 5 gezeigten Vorrichtung verschwenkbare Auflageplatte 43 können die Ritzlinien durch Verschwenken der Auflageplatte 43 nach oben und nach unten geöffnet werden. Durch Betätigen der beiden Druckmittelzylinder 44 an den Enden der Auflageplatte 43 kann diese mit dem an ihr festgelegten Teil der Verbundglasscheibe von der feststehenden Auflageplatte 41 wegbewegt werden, um den Spalt zwischen den beiden Teilen der Verbundglasscheibe zu bilden, in dem die die Glasscheiben der Verbundglasscheibe verbindende Folie gespannt ist, damit diese zum Abtrennen mit Hilfe des Plasmabrenners 15 bereit ist.

Vorzugsweise wird die Verbundglasscheibe so geteilt, daß zunächst durch Verschwenken der Auflageplatte 43 nach oben die in ihrer unteren Glasscheibe erzeugte Ritzlinie geöffnet wird. Dann wird durch Verschwenken der Auflageplatte 43 nach unten mit gleichzeitigem Wegbewegen der beweglichen Auflageplatte die obere Glasscheibe gebrochen und der Spalt geöffnet. Dadurch kann so wie bei der in den Fig. 1 bis 4 gezeigten Ausführungsform das Ausmuscheln der unteren Glasscheibe der Verbundglasscheibe verhindert werden.

Zusammenfassend kann die Erfindung beispielsweise wie folgt dargestellt werden:

Bei einem Verfahren zum Schneiden von Verbundglas wird das Verbundglas auf beiden Seiten geritzt, zunächst zur einen und dann zur anderen Seite geknickt, wobei man beim zweiten Knickvorgang die beiden Teile des Verbundglases auseinanderzieht. Die so gespannte Folie wird durch einen in den durch den Knickvorgang gebildeten Spalt gerichteten Plasmastrahl, der über die ganze Länge des Spaltes bewegt wird, abgeschmolzen.

Die Vorrichtung zur Durchführung des Verfahrens besitzt zwei plattenartige Auflagen 41, 43 für das zu schneidende Verbundglas 10, von welchen mindestens eine um eine im Stoßbereich 52 zwischen den beiden Auflagen 41, 43 verlaufende Achse 46 hin- und herverschwenkbar ist. Die Auflagen weisen Klemmeinrichtungen 50, 61 zum Festlegen der Verbundglasscheibe 10 auf. Weiters ist ein Plasmabrenner 15 vorgesehen, der eine auf den Stoßbereich 52 zwischen den Auflagen 41, 43 hin gerichtete Austrittsöffnung für Gas im Plasmazustand (Plasmastrahl) aufweist, und der parallel zum Stoßbereich 53 verfahrbar ist.

## Patentansprüche

1. Verfahren zum Schneiden von Verbundglas, insbesondere Zweischeiben-Verbundglas, bei dem man das Verbundglas auf beiden Seiten ritzt, das Verbundglas zunächst zur einen und dann zur anderen Seite knickt, die zwischen den Scheiben des Verbundglases angeordnete Kunststoffolie spannt, indem man die beiden Teile des Verbundglases beim oder nach dem zweiten Knickvorgang auseinanderzieht und schließlich die Folie durch Wärmezufuhr abschmilzt, dadurch gekennzeichnet, daß man zum Abschmelzen der Folie in den durch das Auseinanderziehen der beiden Teile des Verbundglases gebildeten Spalt einen Strahl von Gas im Plasmazustand richtet, daß man den Strahl von Gas im Plasmazustand von einem Ende des Spaltes in dessen Längsrichtung bis zum anderen Ende desselben bewegt und daß man den Strahl aus Gas im Plasmazustand so konzentriert und bündelt, daß sein Außenumfang mit Abstand von den Rändern der beiden Teile des Verbundglases, die den Spalt begrenzen, angeordnet ist.

2. Verfahren nach Anspruch 1, dadurch gekennzeichnet, daß man den Strahl von Gas im Plasmazustand mit einem Mantel aus Gas mit niedrigerer Temperatur als der Kern des Strahls aus Gas im Plasmazustand umgibt.

3. Verfahren nach Anspruch 1 oder 2, dadurch gekennzeichnet, daß man das Verbundglas beim zweiten Knickvorgang um insgesamt 4 bis 5° knickt, wobei man den Strahl von Gas im Plasmazustand nach einer Knickung um 1° in den Spalt richtet.

4. Verfahren nach einem der Ansprüche 1 bis 3, dadurch gekennzeichnet, daß man mit der Spitze des Strahls von Gas im Plasmazustand die im Spalt gespannte Folie berührt.

5. Vorrichtung zum Durchführen des Verfahrens nach einem der Ansprüche 1 bis 4, mit zwei plattenartigen Auflagen (1, 2) für das zu schneidende Verbundglas (10), von welchen mindestens eine (2) um eine im Stoßbereich zwischen den beiden Auflagen verlaufende Achse (4) hin- und herverschwenkbar ist, und mit Enrichtungen (13, 14) zum Festlegen des Verbundglases (10) an den Auflagen (1, 2), dadurch gekennzeichnet, daß ein Plasmabrenner (15) vorgesehen ist, der eine auf den Stoßbereich (3) zwischen den Auflagen (1, 2) hin gerichtete Austrittsöffnung (30) für den Plasmastrahl aufweist, und daß der Plasmabrenner (15) auf einer parallel zur Achse (4) ausgerichteten Führungsschiene (24) geführt ist.

6. Vorrichtung nach Anspruch 5, dadurch gekennzeichnet, daß die der zweiten Auflage (2) zugeordnete Einrichtung zum Festlegen des Verbundglases (10) als Klemmeinrichtung (14) mit einem Exzenterbalken (20) ausgebildet ist, der den auf der zweiten Auflage (2) aufliegenden Abschnitt des Verbundglases (10) niederdrückt und gleichzeitig vom Stoßbereich (3) zwischen den beiden Auflagen (1, 2) weg belastet.

7. Vorrichtung nach Anspruch 5 oder 6, dadurch gekennzeichnet, daß die Auflagen (1, 2) als Luftkissenförderer (7) ausgebildet sind, wobei an die Austrittsöffnungen für die das Luftkissen bildende Luft zur Unterstützung des Fixierens der Abschnitte des Verbundglases (10) an den Auflagen (1, 2), insbesondere beim zweiten Knickvorgang, Unterdruck anlegbar ist.

8. Vorrichtung nach einem der Ansprüche 5 bis 7, dadurch gekennzeichnet, daß die Austrittsöffnung (30) des Plasmabrenners (15) eine Breite von etwa 1 mm aufweist.

9. Vorrichtung nach einem der Ansprüche 5 bis 8, dadurch gekennzeichnet, daß der Plasmabrenner (15) aus einer Bereitschaftsstellung in seine Wirklage einschwenkbar ist, in der die Austrittsöffnung (30) für den Plasmasstrahl dem Spalt gegenüberliegt.

10. Vorrichtung nach Anspruch 9, dadurch gekennzeichnet, daß am Plasmabrenner (15) ein Anschlag (27) vorgesehen ist, der bei in seiner Wirkstellung befindlichem Plasmabrenner (15) am Verbundglas (10) anliegt.

11. Vorrichtung nach einem der Ansprüche 5 bis 10, dadurch gekennzeichnet, daß den Förderorganen (5, 6), insbesondere jenen der in Förderrichtung gesehen ersten, gestellfesten Auflage, Wegmeßeinrichtungen zum Bestimmen der Schnittlage zugeordnet sind.

12. Vorrichtung nach einem der Ansprüche 5 bis 11, dadurch gekennzeichnet, daß zum Festlegen der Schnittlage verstellbare Anschläge für das Verbundglas (10) vorgesehen sind.

13. Vorrichtung zum Durchführen des Verfahrens nach einem der Ansprüche 1 bis 4 mit zwei plattenartigen Auflagen (41, 43) für die zu schneidende Verbundglasscheibe, von welchen eine (43) um eine im Stoßbereich (52) zwischen den beiden Auflagen (41, 43) verlaufende Achse (46) verschwenkbar ist, und mit Einrichtungen (61, 50) zum Festlegen der Verbundglasscheibe an den Auflagen (41, 43), die beiderseits des Stoßbereiches (52) zwischen den beiden Auflagen (41, 43) angeordnet sind, dadurch gekennzeichnet, daß eine (41) der beiden im wesentlichen horizontal ausgerichteten Auflagen (41, 43) im Maschinengestell (40) starr befestigt ist, wogegen die zweite Auflage (43) um eine im Stoßbereich (52) angeordnete, horizontale Achse (46) auf- und abverschwenkbar gelagert und zusätzlich in Richtung der Ebene der ortsfesten Auflage (41) quer zu dieser beweglich ist, und daß der Plasmabrenner (15) auf einer parallel zur Achse (46) ausgerichteten Führungsschiene (60) geführt ist.

14. Vorrichtung nach Anspruch 13, dadurch gekennzeichnet, daß die bewegliche Auflage (43) über an den Kolbenstangen von Druckmittelzylindern (44) befestigte Lager (45) im Maschinengestell (40) verschwenkbar gelagert ist und daß dem dem Stoßbereich (52) gegenüberliegenden Rand der beweglichen Auflage (43) wenigstens ein Druckmittelzylinder (47) zum Auf- und Abschwenken der Auflage (43) zugeordnet ist.

15. Vorrichtung nach Anspruch 14, dadurch gekennzeichnet, daß der Druckmittelzylinder (47) ein Doppelzylinder mit nach zwei Seiten austretenden Kolbenstangen ist.

16. Vorrichtung nach einem der Ansprüche 5 bis 15, dadurch gekennzeichnet, daß die Einrichtung zum Festlegen der Verbundglasscheibe an den plattenförmigen Auflagen (41, 43) an wenigstens einer Platte (43) als Unterdrucksaugvorrichtung (61), die aus mehreren im Stoßbereich angeordneten Saugköpfen besteht, ausgebildet ist.

17. Vorrichtung nach einem der Ansprüche 5 bis 16, dadurch gekennzeichnet, daß die Einrichtung zum Festlegen der Verbundglasscheibe an den plattenförmigen Auflagen (41, 43) an wenigstens einer der beiden plattenförmigen Auflagen (41) eine Klemmeinrichtung mit einem von oben auf die plattenförmige Auflage (41) zu absenkbaren Klemmbalken (50) ist, daß der Klemmbalken (50) an Hebeln (51) montiert ist, die am vom Stoßbereich (52) entfernt liegenden Rand (48) der plattenförmigen Auflage (41) verschwenkbar gelagert sind.

18. Vorrichtung nach Anspruch 17, dadurch gekennzeichnet, daß zum Betätigen des Klemmbalkens (50) um eine maschinengstellfeste Achse verschwenkbar gelagerte Kurbeln (54) vorgesehen sind, die mit einer Schub- bzw. Zugstange (55) mit dem Klemmbalken (50) gekuppelt sind.

19. Vorrichtung nach Anspruch 18, dadurch gekennzeichnet, daß die Hebel (55) an einer im Maschinengestell (40) drehbar gelagerten Welle (53) vorgesehen sind.

20. Vorrichtung nach einem der Ansprüche 5 bis 19, dadurch gekennzeichnet, daß im Stoßbereich (52) zusätzlich zu dem Plasmabrenner (15) ein Schneidwerkzeug mit von oben und von unten her auf die Verbundglasscheibe einwirkenden Schneidrädern od. dgl. Ritzwerkzeugen (11, 12) in Richtung des Stoßbereiches (52) zwischen den beiden Auflagen auf Führungsschienen verfahrbar ist.

21. Vorrichtung nach Anspruch 20, dadurch gekennzeichnet, daß das von oben wirksame Ritzwerkzeug auf der Führungsschiene (60) des Plasmabrenners (15) verfahrbar ist.

22. Vorrichtung nach einem der Ansprüche 5 bis 20, dadurch gekennzeichnet, daß der Klemmbalken (50) die Führungsschiene (60) für den Plasmabrenner (15) und gegebenenfalls das Schneidwerkzeug (11) trägt.
